Europäisches Patentamt

European Patent Office

Office européen des brevets

(19)

(11) Numéro de publication: **0 050 555**
**B1**

(12) # FASCICULE DE BREVET EUROPEEN

(45) Date de publication du fascicule du brevet:
11.09.85

(21) Numéro de dépôt: 81401572.3

(22) Date de dépôt: 09.10.81

(51) Int. Cl.⁴: **G 02 B 6/26**

(54) **Dispositifs de couplage de lumière entre fibres optiques.**

(30) Priorité: 21.10.80 FR 8022459

(43) Date de publication de la demande:
**28.04.82 Bulletin 82/17**

(45) Mention de la délivrance du brevet:
**11.09.85 Bulletin 85/37**

(84) Etats contractants désignés:
**BE DE FR GB IT**

(56) Documents cités:
**US - A - 3 912 364**
**US - A - 4 211 469**

**LASER FOCUS, vol. 16, no. 9, septembre 1980, (US),
"Kaptron Inc., formed by a fiber pioneer, begins offering
couplers and splitters", pages 71-72
ELECTRO-OPTICAL SYSTEMS DESIGN, vol. 12, no. 6,
juin 1980, (US), "Family of couplers described", page 16
ELECTRONIC DESIGN, vol. 26, no. 20, 27 septembre
1978, (US), "Electro-optic crystal devices supply missing
fiber optic links", pages 34,35**

(73) Titulaire: **SOCAPEX, 10 bis, quai Léon Blum,
F-92153 Suresnes (FR)**

(72) Inventeur: **d'Auria, Luigi, THOMSON-CSF SCPI 173, bld
Haussmann, F-75360 Paris Cedex 08 (FR)**
Inventeur: **Richin, Philippe, THOMSON-CSF
SCPI 173, bld Haussmann, F-75360 Paris Cedex 08 (FR)**

(74) Mandataire: **Ruellan-Lemonnier, Brigitte et al,
THOMSON-CSF SCPI 173, boulevard Haussmann,
F-75379 Paris Cedex 08 (FR)**

## Description

La présente invention concerne des dispositifs de couplage de lumière entre fibres optiques.

Le brevet français 2 441 860 décrit un dispositif pour relier de façon permanente deux à deux au moins une paire de fibres optiques grâce à une surface réfléchissante de forme sphérique. Les extrémités des fibres sont placées dans un même plan, qui contient également le centre de courbure de cette surface réfléchissante. Ainsi toute l'énergie sortant par une fibre passe après réflexion dans la fibre placée symétriquement par rapport au centre de courbure.

Deux articles, respectivement parus dans ELECTRO-OPTICAL SYSTEMS DESIGN — vol. 12, N° 6, juin 1980 (US), page 16, et dans LASER FOCUS, vol. 16, N° 9, septembre 1980 (US), pages 71 et 72, décrivent une famille générique de dispositifs de couplage de lumière entre fibres optiques, tous basés sur le même concept commun consistant à utiliser une surface concave à haut pouvoir réflecteur (99%) pour réaliser un couplage optique entre des fibres d'émission et des fibres de réception toutes situées du même côté de ladite surface concave réfléchissante, la faible partie (1%) de lumière transmise à travers cette surface concave étant par ailleurs utilisée pour la génération d'un signal électrique de contrôle. La famille ainsi basée sur le concept ci-dessus comprend des dispositifs de couplage divers, tels que des multiplexeurs (nécessitant l'utilisation de deux surfaces concaves adjacentes), des démultiplexeurs (nécessitant le remplacement du miroir concave par un réseau de diffraction), ou des commutateurs (nécessitant l'utilisation de parties mobiles).

La présente invention a pour but de proposer différents dispositifs de couplage de lumière entre fibres optiques basés sur un concept voisin de celui décrit ci-dessus.

A cet effet, la présente invention a tout d'abord pour objet un multiplexeur optique en fréquence tel que défini dans la revendication 1.

La présente invention a également pour objet un démultiplexeur optique en fréquence tel que défini dans la revendication 2.

La présente invention a enfin pour objet un commutateur optique tel que défini dans la revendication 3.

D'autres caractéristiques et avantages ressortiront de la description, qui va suivre illustrée par les figures qui représentent:

— figure 1, un dispositif de couplage suivant l'art antérieur,

— figures 2, 3, 4, des dispositifs de couplage illustratifs de l'état de la technique,

— figures 5 et 6, un premier dispositif de couplage suivant l'invention permettant le démultiplexage de signaux à des longueurs d'onde différentes,

— figure 7, un second dispositif de couplage suivant l'invention permettant un multiplexage,

— figure 8, un commutateur optique suivant l'invention équipé d'une cellule électrolytique commandant la réflexion,

— figure 9, une variante de commutateur optique.

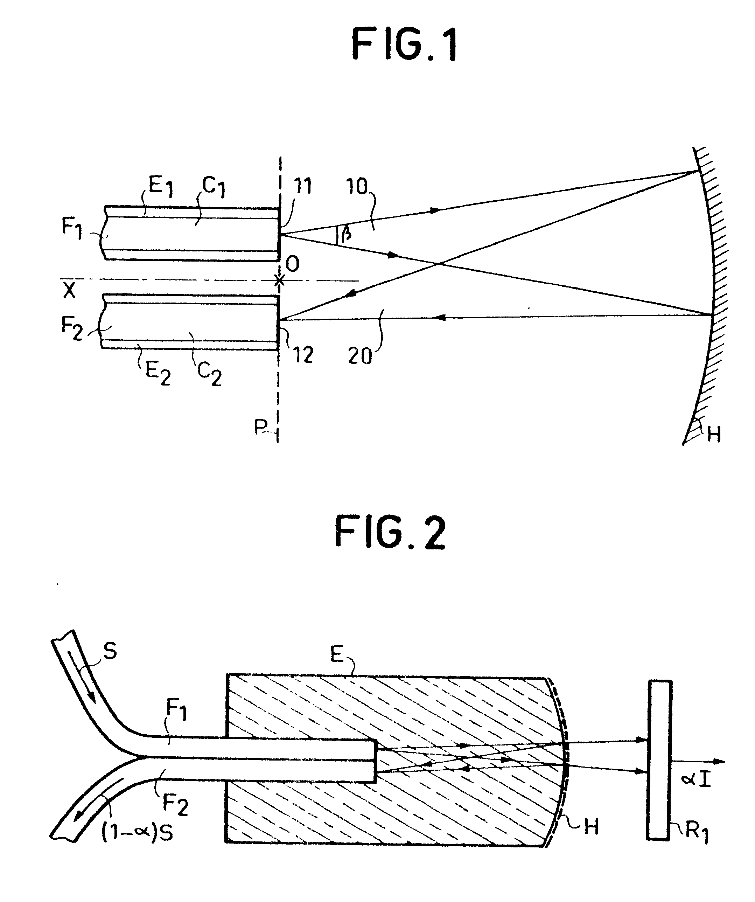

La figure 1 montre le principe du couplage des fibres $F_1$ et $F_2$ suivant le brevet français 2 441 860. Les extrémités des fibres $F_1$ et $F_2$ sont appuyés contre un plan P. $E_1$, $C_1$ et $E_2$, $C_2$ sont respectivement les enveloppes et le cœur des fibres $F_1$ et $F_2$. La surface réfléchissante sphérique H a son centre de courbure en O. Les deux fibres $F_1$ et $F_2$ sont placées symétriquement par rapport à ce point O, de façon à ce que le faisceau 10, d'ouverture angulaire $\beta$, issu de la face de sortie 11 donne après réflexion complète sur la surface H, un faisceau 20 de même ouverture angulaire entrant dans la fibre $F_2$ par la face d'entrée 12.

Dans la suite de la description, la surface H est choisie defaçon a n'être que partiellement réfléchissante et la partie de l'énergie incidente ainsi transmise peut être utilisée, soit pour être détectée, soit pour être recouplée, dans une troisième fibre. La surface H peut également recevoir un rayonnement qui sera transmis vers l'une au moins des extrémités de fibres $F_1$ et $F_2$.

Un montage de détection partielle de la puissance optique S se propageant dans la fibre $F_1$, est montrée par la figure 2. Si $\alpha$ est le coefficient de transmission de la surface H et si l'on néglige pour simplifier toutes les pertes, une puissance $\alpha S$ tombe sur le détecteur $R_1$ et une puissance $(1 - \alpha)S$ est recouplée dans la fibre $F_2$. Si I est le courant fourni par le photodétecteur $R_1$ pour la puissance S, à la détection partielle correspond un courant $\alpha I$.

Ce montage permet ainsi de prélever une partie de la puissance propagée par une fibre pour qu'une partie soit détectée au passage.

Sur la figure 2, on a représenté un exemple de réalisation de montage par un embout E en matière transparente, comportant à une extrémité la surface sphérique partiellement réfléchissante H et à l'autre extrémité un trou cylindrique pour le centrage des fibres $F_1$ et $F_2$. Les extrémités de ces fibres étant placées dans le plan contenant le centre de courbure de la surface H.

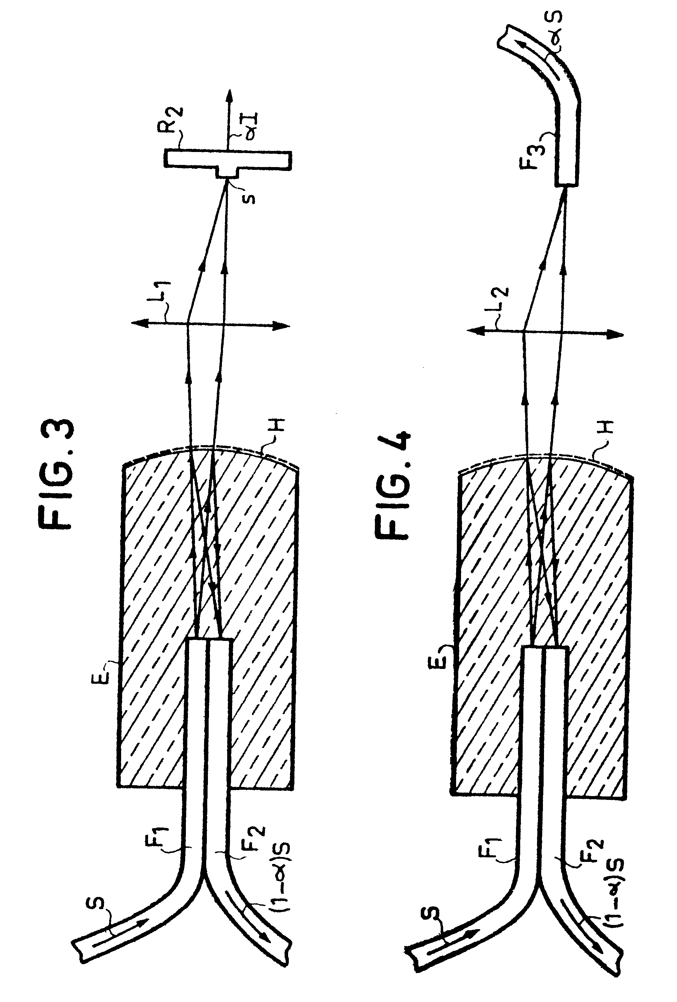

Si la surface sensible s du récepteur est faible, ce montage est montré à la figure 3. Le faisceau transmis est focalisé par une lentille $L_1$ sur la surface s du récepteur $R_2$.

Comme précédemment, on détecte la partie $\alpha S$ de la puissance indicente et l'on recouple dans la fibre $F_2$ la partie $(1 - \alpha)S$.

La puissance $\alpha S$ transmise par la surface H peut être utilisée pour être recouplée dans une troisième fibre optique $F_3$. Dans ce cas (figure 4), une lentille $L_2$ focalise le faisceau transmis sur la fibre $F_3$ qui propage la puissance $\alpha S$. Le montage de la figure 4 permet ainsi de distribuer la puissance optique d'une fibre sur plusieurs fibres.

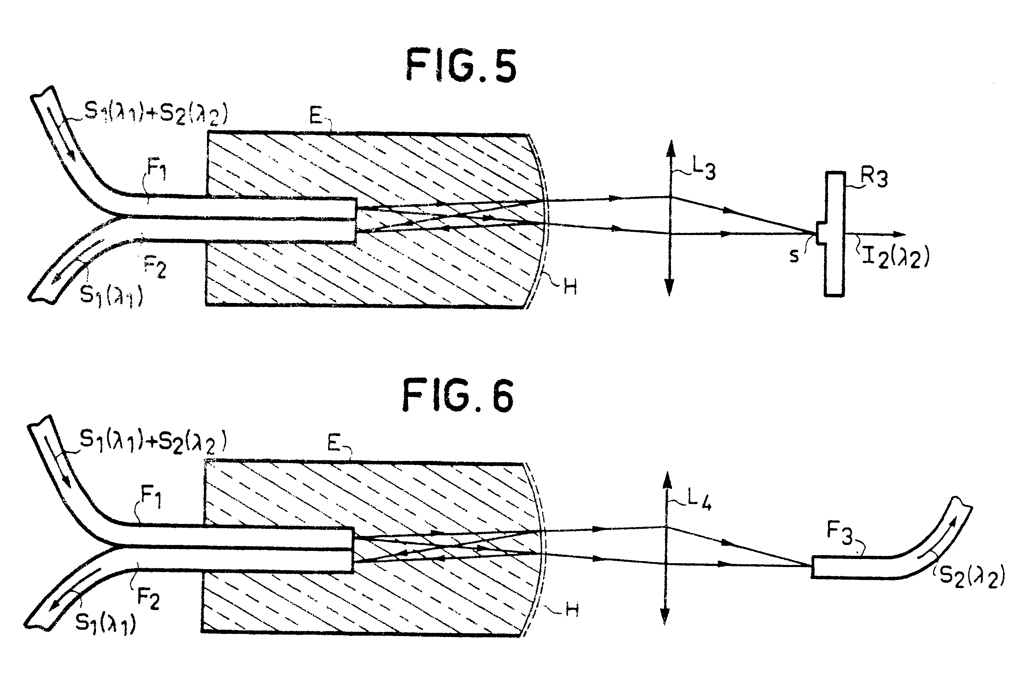

Suivant un premier dispositif de couplage selon l'invention (figure 5), la puissance du signal optique dans la fibre $F_1$ est multiplexé en fré-

quence et contient par exemple la puissance $S_1(\lambda_1)$ à la longueur d'onde $\lambda_1$, et la puissance $S_2(\lambda_2)$ à la longueur d'onde $\lambda_2$. La surface H a un revêtement tel qu'elle soit réfléchissante pour la longueur d'onde $\lambda_1$ et qu'elle transmette à la longueur d'onde $\lambda_2$. Il est possible alors de placer un détecteur qui fournit (figure 5) le courant $I_2(\lambda_2)$, correspondant à la puissance $S_2(\lambda_2)$. La puissance réfléchie $S_1(\lambda_1)$ est couplée dans la fibre $F_2$.

La figure 6 montre un montage de démultiplexage selon l'invention, dans lequel les puissances incidentes $S_1(\lambda_1)$ et $S_2(\lambda_2)$ sont séparées par le miroir dichroïque et recouplées vers les fibres $F_2$ et $F_3$ respectivement.

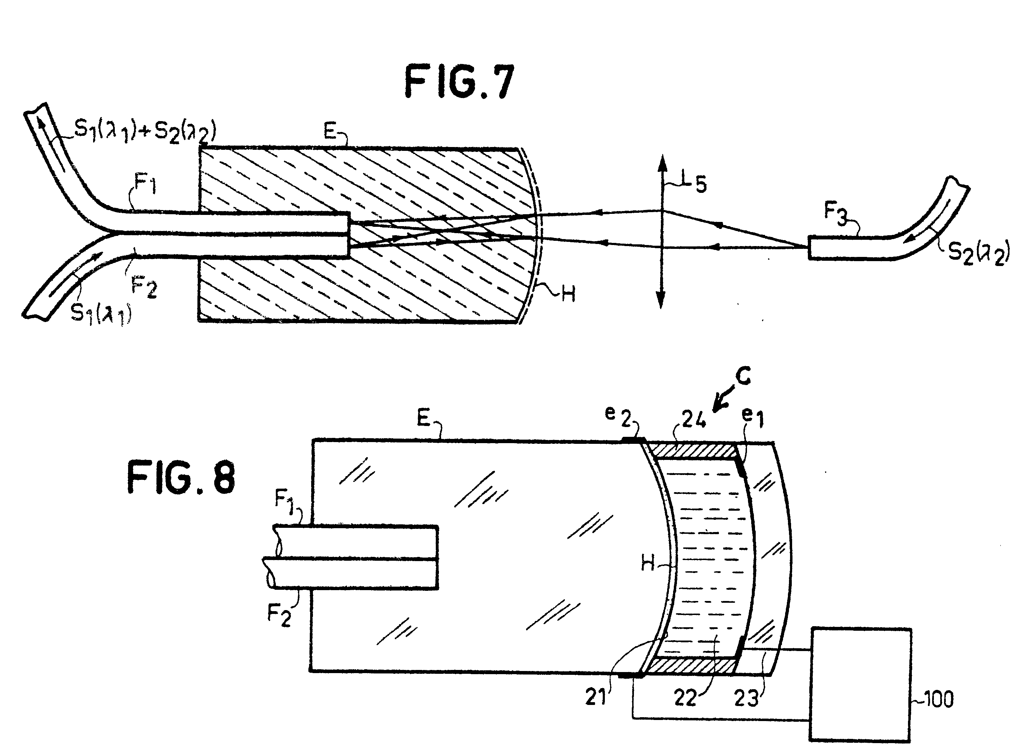

Le montage de la figure 7 permet également, par retour inverse de la lumière, de multiplexer en fréquence. Ainsi, une puissance $S_2(\lambda_2)$ se propageant dans la fibre $F_3$ est couplée par la lentille $L_5$ à travers le miroir dichroïque dans la fibre $F_1$. La puissance $S_1(\lambda_1)$ se propageant dans la fibre $F_2$ est couplée également dans la fibre $F_1$ par réflexion sur le miroir dichroïque H. Une fibre supplémentaire distincte de $F_3$ pourrait être conjuguée avec la fibre $F_2$.

Suivant une variante de l'invention, la surface sphérique H est rendue réfléchissante ou transparente par commande électrique.

Un exemple de réalisation est montré par la figure 8, qui utilise le principe connu des cellules électrolytiques pour l'affichage.

La surface sphérique H de l'embout E est recouverte d'une électrode $e_2$ transparente qui déborde sur la face cylindrique de cet embout.

Un électrolyte organique 22 à base d'argent est enfermé par une lame de verre mince 23 et une pièce cylindrique 24. Une électrode en argent $e_1$ ayant la forme d'un anneau est fixée sur la lame 23. Une tension V peut être appliquée entre les électrodes $e_1$ et $e_2$ au moyen d'un générateur électrique de commande 100.

Si le potentiel de l'électrode $e_2$ est négatif, l'argent de l'électrolyte s'y dépose rendant la surface sphérique réfléchissante. Par contre, si le potentiel de l'électrode est positif, l'argent se dissout, se dépose sur l'électrode $e_1$ et la cellule C devient transparente.

En résumé, une impulsion négative de V rend le dispositif réfléchissant et une impulsion positive réétablit la transparence.

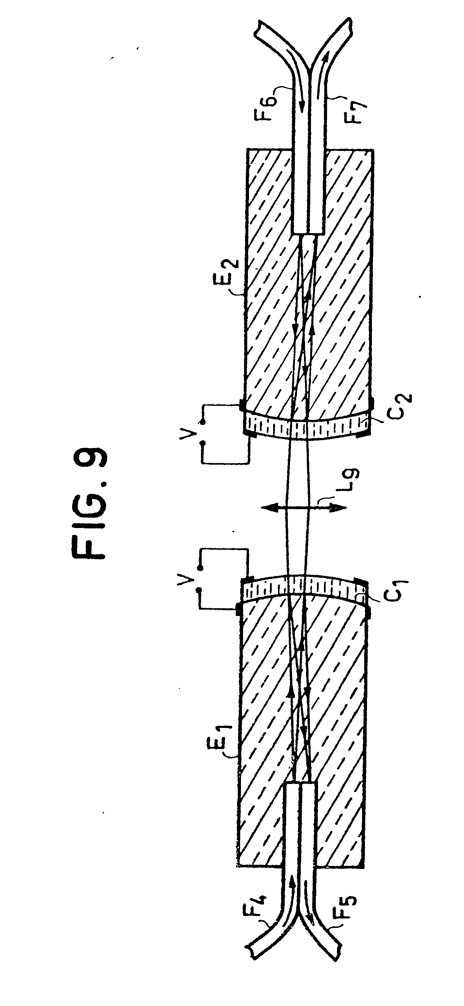

Un exemple d'application suivant l'invention, est montré par la figure 9. Un embout $E_1$ contient les fibres optiques $F_4$ ou $F_5$ et un embout $E_2$ les fibres optiques $F_6$ et $F_7$. Les deux embouts $E_1$ et $E_2$ sont munis des cellules électrolytiques $C_1$ et $C_2$ et une lentille $L_9$ focalise un faisceau issu de la fibre $F_4$ sur la fibre $F_7$ et un faisceau issu de la fibre $F_6$ dans la fibre $F_5$.

Si l'impulsion V appliquée sur les deux cellules est négative, la puissance optique se propageant dans la fibre $F_4$ est couplée dans la fibre $F_5$ et la puissance se propageant dans la fibre $F_6$ est couplée dans la fibre $F_7$. Par contre, pour une impulsion positive, les cellules $C_1$ et $C_2$ deviennent transparentes et le couplage est obtenu entre les fibres $F_4$, $F_7$ et $F_6$, $F_5$. Ce dispositif joue donc le rôle de double commutateur.

Il est évident que l'utilisation d'une cellule électrolytique pour les montages des figures 2, 3 et 4 permet une commutation d'une fibre vers un récepteur ou une autre fibre et une commutation possible vers deux fibres.

Pour les montages présentés, il est possible comme déjà montré dans le brevet français précité, de placer dans le trou de l'embout 2n fibres symétriques deux à deux par rapport au centre de courbure.

## Revendications

1. Multiplexeur optique en fréquence, comprenant:

— un corps réfringent (E), pourvu d'au moins un logement pour l'insertion de fibres optiques, et d'une surface réfléchissante concave (H) à concavité tournée vers le logement, la surface réfléchissante étant partiellement transparente;
— une première fibre optique émettrice ($F_2$) et une fibre optique réceptrice ($F_1$) insérées dans le logement, dont les faces d'extrémité sont disposées par rapport à la surface réfléchissante de manière telle que la lumière en provenance de la fibre émettrice qui est susceptible d'être réfléchie par ladite surface soit refocalisée sur la face d'entrée de la fibre réceptrice, et
— des moyens ($F_3$, $L_5$) situés à l'extérieur du corps réfringent, agencés par rapport à la surface réfléchissante partiellement transparente de façon à permettre un échange de rayonnement, au travers de ladite surface, avec au moins l'une des fibres insérées dans ledit logement,

caractérisé en ce que:

— ladite surface concave (H) est adaptée de façon à être réfléchissante pour une première longueur d'onde $\lambda_1$, et transparente pour une seconde longueur d'onde $\lambda_2$,
— lesdits moyens extérieurs ($F_3$, $L_5$) sont constitués par une seconde fibre émettrice ($F_3$) destinée à émettre un rayonnement lumineux à la seconde longueur l'onde $\lambda_2$, et coopérant avec une lentille ($L_5$) agencée de façon à refocaliser sur la face d'entrée de la fibre réceptrice ($F_1$) le rayonnement $\lambda_2$ susceptible d'être emis par cette seconde fibre émettrice, et,
— ladite première fibre émettrice ($F_2$) est destinée à émettre un rayonnement lumineux à la première longueur d'onde $\lambda_1$, de sorte que ladite fibre réceptrice ($F_1$) est ainsi susceptible de recevoir, à la fois, le rayonnement lumineux $\lambda_1$ émis par la première fibre ($F_2$) et réfléchi par ladite surface (H), et le rayonnement lumineux $\lambda_2$ émis par la deuxième fibre

optique (F$_3$) et transmis à travers ladite surface (H), réalisant ainsi leur multiplexage ($\lambda_1$, $\lambda_2$) (figure 7).

2. Démultiplexeur optique en fréquence comprenant un corps réfringent (E), pourvu d'au moins un logement pour l'insertion de fibres optiques, et d'une surface réfléchissante concave (H) à concavité tournée vers le logement, la surface réfléchissante étant partiellement transparente, une fibre optique émettrice (F$_1$) et une première fibre optique réceptrice (F$_2$) insérées dans le logement, dont les faces d'extrémité sont disposées par rapport à la surface réfléchissante de manière telle que la lumière en provenance de la fibre émettrice qui est susceptible d'être réfléchie par ladite surface soit refocalisée sur la face d'entrée de la fibre réceptrice, et des moyens récepteurs (R$_3$, L$_3$; F$_3$, L$_4$) situés à l'extérieur du corps réfringent, agencés par rapport à la surface réfléchissante partiellement transparente de façon à permettre un échange de rayonnement, au travers de ladite surface, avec au moins l'une des fibres insérées dans ledit logement, caractérisé en ce que ladite surface concave (H) est adaptée de façon à être réfléchissante pour une première longueur d'onde $\lambda_1$, et transparente pour une seconde longueur d'onde $\lambda_2$, et en ce que ladite fibre émettrice (F$_1$) est destinée à émettre un rayonnement lumineux multiplexé à la première ($\lambda_1$) et à la deuxième ($\lambda_2$) longueurs d'onde, de sorte que la fraction du rayonnement émis par la fibre émettrice (F$_1$) à la première longueur d'onde ($\lambda_1$) est recouplée dans la première fibre réceptrice (F$_2$) et la fraction du rayonnement émis par la fibre émettrice (F$_1$) à la seconde longueur d'onde ($\lambda_2$) est reçue par lesdits moyens récepteurs, ceux-ci étant constitués soit par un récepteur photo-sensible (R$_3$), soit par une seconde fibre optique réceptrice (F$_3$) coopérant avec une lentille (L$_3$; L$_4$) (figures 5 et 6).

3. Commutateur optique comprenant un corps réfringent (E; E$_1$), pourvu d'au moins un logement pour l'insertion de fibres optiques, et d'une surface réfléchissante concave (H) à concavité tournée vers le logement, la surface réfléchissante étant partiellement transparente, une fibre optique émettrice (F$_1$, F$_4$) et une fibre optique réceptrice (F$_2$, F$_5$) insérées dans le logement, dont les faces d'extrémité sont disposées par rapport à la surface réfléchissante de manière telle que la lumière en provenance de la fibre émettrice qui est susceptible d'être réfléchie par ladite surface soit refocalisée sur la face d'entrée de la fibre réceptrice, et des moyens (L$_9$, C$_2$, L$_2$) situés à l'extérieur du corps réfringent, agencés par rapport à la surface réfléchissante partiellement transparente de façon à permettre un échange de rayonnement, au travers de ladite surface, avec au moins l'une des fibres insérées dans ledit logement, caractérisé en ce que ladite surface concave (H) est adaptée pour être rendue sélectivement réfléchissante ou transparente par commande électrique, cette surface (H) étant, à cet effet, constituée par l'une des électrodes (e$_2$), transparente, d'une cellule électrolytique (C, C$_1$) accolée contre ledit corps réfringent (E, E$_1$), dont l'autre électrode (e$_1$) est disposée en dehors du trajet des rayons lumineux susceptibles d'être échangés avec l'extérieur, ladite cellule électrolytique (C, C$_1$) étant commandée par des impulsions électriques positives ou négatives rendant la cellule respectivement réfléchissante ou transparente de par la présence ou l'absence ainsi produite d'un dépôt réfléchissant sur ladite électrode transparente (e$_2$), de sorte que la lumière émise par la fibre émettrice (F$_1$, F$_4$) est ainsi susceptible, selon la polarité de la commande électrique, d'être soit recouplée dans la fibre réceptrice (F$_2$, F$_5$), soit transmise vers lesdits moyens extérieurs (L$_9$, C$_2$, L$_2$) (figures 8 et 9).

4. Commutateur optique selon la revendication 3, caractérisé en ce que lesdits moyens (L$_9$, C$_2$, L$_2$) se trouvant à l'extérieur sont constitués par un second corps réfringent (E$_2$) identique au premier (E$_1$) et disposé en vis-à-vis de celui-ci, contre lequel est accolée une seconde cellule électrolytique (C$_2$) identique à la première (C$_1$) et commandée par les mêmes impulsions électriques, et dans le logement duquel se trouve inséré un second couple de fibres optiques respectivement émettrice (F$_6$) et réceptrice (F$_7$), et en ce qu'une lentille (L$_9$) est disposée entre les deux corps réfringents (E$_1$, E$_2$) de manière à pouvoir focaliser, respectivement, le faisceau susceptible d'être transmis à l'extérieur par la fibre émettrice (F$_4$) du premier corps réfringent (E$_1$) sur la fibre réceptrice (F$_7$) du second corps réfringent (E$_2$), et le faisceau susceptible d'être transmis à l'extérieur par la fibre émettrice (F$_6$) du second corps réfringent (E$_2$) sur la fibre réceptrice (F$_5$) du premier corps réfringent (E$_1$), de sorte que la lumière émise par la fibre émettrice (F$_4$, F$_6$) de chaque corps réfringent (E$_1$, E$_2$) est ainsi susceptible, selon la polarité de la commande électrique commune appliquée aux deux cellules (C$_1$, C$_2$), d'être recouplée, soit dans la fibre réceptrice (F$_5$, F$_7$) du même corps réfringent, soit dans la fibre réceptrice de l'lautre corps réfringent, permettant ainsi la réalisation d'une double commutation (figure 9).

**Patentansprüche**

1. Optischer Frequenzmultiplexer, mit

— einem lichtbrechenden Körper (E) mit mindestens einer Öffnung zur Einführung von Lichtleitfasern, und mit einer konkaven reflektierenden Oberfläche (H), deren Konkavität zur Öffnung hinzeigt, wobei die reflektierende Oberfläche teilweise transparent ist,
— einer ersten Sende-Lichtleitfaser (F$_2$) und einer Empfangs-Lichtleitfaser (F$_1$), die in die Öffnung eingeführt sind, deren Endflächen in bezug auf die reflektierende Oberfläche so angeordnet sind, daß das von der sendenden Faser kommende Licht, das von der Oberfläche reflektiert wird, auf die Eingangsfläche der Empfangsfaser zurückfokalisiert wird, und

— Mitteln (F₃, L₅), die sich außerhalb des lichtbrechenden Körpers befinden und in bezug auf die teilweise transparente reflektierende Oberfläche so angeordnet sind, daß sie einen Strahlungsaustausch durch diese Oberfläche hindurch mit mindestens einer der in die Öffnung eingeführten Fasern ermöglichen,

dadurch gekennzeichnet, daß

— die konkave Oberfläche (H) so angepaßt ist, daß sie für eine erste Wellenlänge $\lambda_1$ reflektierend und für eine zweite Wellenlänge $\lambda_2$ transparent ist,

— die äußeren Mittel (F₃, L₅) aus einer zweiten Sendefaser (F₃) bestehen, die dazu bestimmt ist, eine Lichtstrahlung der zweiten Wellenlänge $\lambda_2$ auszusenden, und die mit einer Linse (L₅) zusammenwirkt, die so angeordnet ist, daß sie die Strahlung $\lambda_2$, die von dieser zweiten Sendefaser ausgesandt wird, auf die Eingangsseite der Empfangsfaser (F₁) refokalisiert, und

— die erste Sendefaser (F₂) dazu bestimmt ist, eine Lichtstrahlung der ersten Wellenlänge $\lambda_1$ auszusenden, so daß die Empfangsfaser (F₁) so zugleich die von der ersten Faser (F₂) ausgesandte und von der Oberfläche (H) reflektierte Lichtstrahlung $\lambda_1$ und die von der zweiten Lichtleitfaser (F₃) ausgesandte und durch die Oberfläche (H) hindurchgesandte Lichtstrahlung $\lambda_2$ empfangen kann und so ihre Multiplexierung bewirkt ($\lambda_1$, $\lambda_2$) (Figur 7).

2. Optischer Frequenzdemultiplexierer mit einem lichtbrechenden Körper (E) mit mindestens einer Öffnung für die Einführung von Lichtleitfasern und mit einer konkaven reflektierenden Oberfläche (H), deren Konkavität zur Öffnung hinzeigt, wobei die reflektierende Oberfläche teilweise transparent ist, mit einer Sende-Lichtleitfaser (F₁) und einer ersten Empfangs-Lichtleitfaser (F₂), die in die Öffnung eingeführt sind, deren Endflächen in bezug auf die reflektierende Oberfläche so angeordnet sind, daß das von der Sendefaser kommende Licht, das von der Oberfläche reflektiert wird, auf die Eingangsfläche der Empfangsfaser zurückfokalisiert wird, und mit Empfangsmitteln (R₃, L₃; F₃, L₄), die sich außerhalb des lichtbrechenden Körpers befinden und in bezug auf die reflektierende, teilweise transparente Oberfläche so angeordnet sind, daß sie einen Strahlenaustausch durch diese Oberfläche mit mindestens einer der in die Öffnung eingeführten Fasern ermöglichen, dadurch gekennzeichnet, daß die konkave Oberfläche (H) so angepaßt ist, daß sie für eine erste Wellenlänge $\lambda_1$ reflektierend und für eine zweite Wellenlänge $\lambda_2$ transparent ist, und daß die Sendefaser (F₁) dazu bestimmt ist, eine multiplexierte Lichtstrahlung mit der ersten ($\lambda_1$) und der zweiten Wellenlänge ($\lambda_2$) auszusenden, so daß der Teil der von der Sendefaser (F₁) mit der ersten Wellenlänge ($\lambda_1$) ausgesandten Strahlung in die erste Empfangsfaser (F₂) zurückgekoppelt wird und der Teil der von der Sendefaser (F₁) mit der zweiten Wellenlänge ($\lambda_2$) ausgesandten Strahlung von den Empfangsmitteln empfangen wird, wobei diese entweder aus einem lichtempfindlichen Empfänger (R₃) oder aus einer zweiten Empfangs-Lichtleitfaser (F₃) bestehen, die mit einer Linse (L₃; L₄) zusammenwirkt (Figuren 5 und 6).

3. Optischer Schalter mit einem lichtbrechenden Körper (E; E₁), mit mindestens einer Öffnung für die Einführung von Lichtleitfasern und mit einer konkaven reflektierenden Oberfläche (H), deren Konkavität zur Öffnung hinzeigt, wobei die reflektierende Oberfläche teilweise transparent ist, mit einer Sende-Lichtleitfaser (F₁, F₄) und einer Empfangs-Lichtleitfaser (F₂, F₅), die in die Öffnung eingeführt sind, deren Endflächen in bezug auf die reflektierende Oberfläche so angeordnet sind, daß das von der Sendefaser kommende Licht, das von der Oberfläche reflektiert wird, auf die Eingangsfläche der Empfangsfaser zurückfokalisiert wird, und mit Mitteln (L₉, C₂, L₂), die sich außerhalb des lichtbrechenden Körpers befinden und in bezug auf die reflektierende, teilweise transparente Oberfläche so angeordnet sind, daß sie einen Strahlenaustausch durch diese Oberfläche mit mindestens einer der in die Öffnung eingeführten Fasern ermöglichen, dadurch gekennzeichnet, daß die konkave Oberfläche (H) so angepaßt ist, daß sie durch elektrische Steuerung wahlweise reflektierend oder transparent gemacht werden kann, wobei diese Oberfläche (H) zu diesem Zweck aus einer transparenten Elektrode (e₂) einer an den lichtbrechenden Körper (E, E₁) anliegenden elektrolytischen Zelle besteht, deren andere Elektrode (e₁) außerhalb des Weges der Lichtstrahlen liegt, die mit der Außenumgebung ausgetauscht werden können, wobei die elektrolytische Zelle (C, C₁) von positiven oder negativen Impulsen gesteuert wird, die die Zelle reflektierend oder transparent machen, je nach dem Vorhandensein oder Nichtvorhandensein einer so hergestellten reflektierenden Schicht auf der transparenten Elektrode (e₂), so daß das von der Sende-Faser (F₁, F₄) ausgesandte Licht so gemäß der Polarität der elektrischen Steuerung entweder in die Empfangsfaser zurückgekoppelt (F₂, F₅) oder zu den äußeren Mitteln (L₉, C₂, L₂) (Figuren 8 und 9) gesandt wird.

4. Optischer Schalter nach Anspruch 3, dadurch gekennzeichnet, daß die Mittel (L₉, C₂, L₂), die sich außerhalb befinden, aus einem zweiten mit dem ersten (E₁) identischen lichtbrechenden Körper (E₂) bestehen, der gegenüber dem ersten angeordnet ist, an dem eine zweite elektrolytische Zelle anliegt, die mit der ersten (C₁) identisch ist und von den gleichen elektrischen Impulsen gesteuert wird, und in dessen Öffnung ein zweites Paar von Lichtleitfasern, nämlich einer Sende- (F6) und einer Empfangs-Lichtleitfaser (F7) eingeführt ist, und daß eine Linse (L9) zwischen den beiden lichtbrechenden Körpern (E1, E2) so angeordnet ist, daß sie den Strahl, der von der Sendefaser (F4) des ersten lichtbrechenden Körpers (E1) nach außen übertragen werden kann, auf die Empfangsfaser (F7) des zweiten lichtbrechenden Körpers (E2), bzw. den Strahl, der von der Sendefaser (F6) des zweiten lichtbrechenden Körpers (E2) nach außen gesandt werden kann, auf die Empfangsfaser (F5) des ersten lichtbrechenden Körpers (E1) fokalisieren kann, so daß das von der Sendefaser (F4, F6) jedes lichtbrechenden Körpers (E1, E2) ausgesandte Licht so je nach der Polarität der gemeinsamen auf die beiden Zellen (C1, C2) ausgeübten elektrischen Steuerung entweder in die Empfangsfaser (F5, F7) des gleichen lichtbrechenden Körpers oder in die Empfangsfaser des anderen lichtbrechenden Körpers zurückgekoppelt werden kann, was die Herstellung einer doppelten Umschaltung ermöglicht (Figur 9).

## Claims

1. An optical frequency multiplexer, comprising

— a refringent body (E) provided with at least one space for the insertion of optical fibres, and with a concave reflecting surface (H), the concavity being turned towards the space, the reflecting surface being partially transparent,
— a first optical emission fibre (F2) and an optical reception fibre (F1) being inserted into the space, the end faces of which are disposed with respect to the reflecting surface such that the light coming from the emission fibre which can be reflected by said surface is refocalized onto the inlet face of the reception fibre, and
— means (F3, L5) situated outside the refringent body and disposed with respect to the partially transparent reflecting surface in such a way that they permit an exchange of radiation, through said surface, with at least one of the fibres inserted in said space,

characterized in that

— said concave surface (H) is adapted so as to be reflecting for a first wave length $\lambda_1$, and transparent for a second wave length $\lambda_2$,
— said outside means (F3, L5) are constituted by a second emission fibre (F3) conceived to emit a light radiation at the second wave length $\lambda_2$, and cooperating with a lens (L5) disposed in such a way that it refocalizes onto the inlet side of the reception fibre (F1) the radiation $\lambda_2$ which is susceptible to be emitted by this second emission fibre, and

— said first emission fibre (F2) is conceived to emit a light radiation at the first wave length $\lambda_1$, so that said reception fibre (F1) is thus susceptible to receive the light radiation $\lambda_1$ emitted by the first fibre (F2) and reflected by said surface (H), as well as the light radiation $\lambda_2$ emitted by the second optical fibre (F2) and transmitted through said surface (H), thus realizing their multiplexing ($\lambda_1$, $\lambda_2$) (figure 7).

2. An optical frequency demultiplexer comprising a refringent body (E) provided with at least one space for the insertion of optical fibres and with a concave reflecting surface (H), the concavity being turned towards the space, the reflecting surface being partially transparent, an optical emission fibre (F1) and a first optical reception fibre (F2) being inserted into the space, the end faces of which are disposed with respect to the reflecting surface such that the light coming from the emission fibre which can be reflected by said surface is refocalized onto the inlet face of the reception fibre, and reception means (R3, L3; F3, L4) situated outside the refringent body and disposed with respect to the partially transparent reflecting surface in such a way that they permit an exchange of radiation, through said surface, with at least one of the fibres inserted in said space, characterized in that said concave surface (H) is adapted in such a way that it is reflecting for a first wave length $\lambda_1$ and transparent for a second wave length $\lambda_2$, and in that said emission fibre (F1) is conceived to emit a multiplexed light radiation at the first ($\lambda_1$) and second wave length ($\lambda_2$), so that the fraction of the radiation emitted by the emission fibre (F1) at the first wave length ($\lambda_1$) is recoupled in the first reception fibre (F2) and the fraction of the radiation emitted by the emission fibre (F1) at the second wave length ($\lambda_2$) is received by said receiving means, these being constituted either by a photo-sensitive receiver (R3), or by a second optical reception fibre (F3) cooperating with a lens (L3; L4) (figures 5 and 6).

3. An optical switch comprising a refringent body (E; E1) provided with at least one space for the insertion of optical fibres, and with a concave reflecting surface (H), the concavity being turned towards the space, the reflecting surface being partially transparent, an optical emission fibre (F1, F4) and an optical reception fibre (F2, F5) being inserted into the space, the end faces of which are disposed with respect to the reflecting surface such that the light radiation coming from the emission fibre which can be reflected by said surface is refocalized onto the inlet face of the reception fibre, and means (L9, C2, L2) situated outside the refringent body and disposed with respect to the partially transparent reflecting surface in such a way that they permit an exchange of radiation, through said surface, with at least one of the fibres inserted in said space, characterized in that said concave surface (H) is adapted for being rendered selectively reflecting or transparent by electrical control, this surface (H) being, to this effect, constituted by a transparent one of the electrodes $(e_2)$ of an electrolytical cell $(C, C_1)$ applied against said refringent body $(E, E_1)$, the other electrode $(e_1)$ of which is disposed away from the passage area of the light rays which are susceptible to be exchanged with the outside, said elektrolytical cell $(C, C_1)$ being controlled by positive or negative electrical pulses rendering the cell reflecting or transparent respectively, depending on the presence or absence of a reflecting layer thus produced on said transparent electrode $(e_2)$, so that the light emitted by the emission fibre $(F_1, F_4)$ is thus susceptible, according to the polarity of the electrical control, to be either coupled back into the reception fibre $(F_2, F_5)$ or transmitted towards said outside means $(L_9, C_2, L_2)$ (figures 8 and 9).

4. An optical switch according to claim 3, characterized in that said outside means $(L_9, C_2, L_2)$ are constituted by a second refringent body $(E_2)$ identical with the first one $(E_1)$ and disposed vis-à-vis of the first, against which is applied a second electrolytical cell $(C_2)$ identical with the first one $(C_1)$ and controlled by the same electrical pulses, and in the space of which a second couple of optical fibres, which are emitting $(F_6)$ and receiving $(F_7)$ respectively, is inserted, and in that a lens $(L_9)$ is disposed between the two refringent bodies $(E_1, E_2)$ so as to be able to focalize the beam, which is susceptible to be transmitted to the outside by the emission fibre $(F_4)$ of the first refringent body $(E_1)$, on the reception fibre $(F_7)$ of the second refringent body $(E_2)$, and the beam respectively which is susceptible to be transmitted to the outside by the emission fibre $(F_6)$ of the second refringent body $(E_2)$ on the reception fibre $(F_5)$ of the first refringent body $(E_1)$, so that the light emitted by the emission fibre $(F_4, F_6)$ of each refringent body $(E_1, E_2)$ is thus susceptible, according to the common electrical control of the two cells $(C_1, C_2)$, to be coupled back, either in the reception fibre $(F_5, F_7)$ of the same refringent body, or in the reception fibre of the other refringent body, thus permitting the realization of a double switching (figure 9).

# FIG.1

# FIG.2

# FIG.3

# FIG.4

# FIG.5

$S_1(\lambda_1)+S_2(\lambda_2)$

E

$F_1$

$F_2$

$S_1(\lambda_1)$

H

$L_3$

$R_3$

s

$I_2(\lambda_2)$

# FIG.6

$S_1(\lambda_1)+S_2(\lambda_2)$

E

$F_1$

$F_2$

$S_1(\lambda_1)$

H

$L_4$

$F_3$

$S_2(\lambda_2)$

0 050 555

# FIG.7

# FIG.8

FIG. 9